# FASCICULE DE BREVET EUROPEEN

(11) **EP 3 347 684 B1**
(45) Date de publication et mention de la délivrance du brevet: **11.10.2023**
(21) Numéro de dépôt: 16775276.5
(22) Date de dépôt: 30.08.2016
(51) Int. Cl.: G01H 7/00

(54) **PROCÉDÉ ET SYSTÈME D'OBTENTION D'AU MOINS UN PARAMÈTRE ACOUSTIQUE D'UN ENVIRONNEMENT**
VERFAHREN UND SYSTEM ZUM ERHALT VON MINDESTENS EINEM AKUSTISCHEN PARAMETER EINER UMGEBUNG
METHOD AND SYSTEM FOR OBTAINING AT LEAST ONE ACOUSTIC PARAMETER OF AN ENVIRONMENT

(30) Priorité: 08.09.2015 FR 1558318
(43) Date de publication de la demande: 18.07.2018
(73) Titulaire: SAINT-GOBAIN ISOVER, 92400 Courbevoie (FR); SAINT-GOBAIN PLACO, 92400 Courbevoie (FR)
(72) Inventeur: DUBOST, Brice, 92400 Courbevoie (FR); SAUSSET, François, 92120 Montrouge (FR)
(74) Mandataire: Saint-Gobain Recherche
(86) Numéro de dépôt international: PCT/FR2016/052144
(87) Numéro de publication internationale: WO 2017/042451

(56) Documents cités:
- EP-A1- 2 455 768
- WO-A1-2014/160419
- Guillaume Vandernoot: "Caractérisation et optimisation de la restitution haute-fidélité en véhicule", Thèse de doctorat de l'Université Paris 6, 5 décembre 2001 (2001-12-05), XP055287144, Extrait de l'Internet: URL:ftp://ftp.ircam.fr/pub/IRCAM/equipes/s alles/download/theses/these_Guillaume_Vand ernoot.pdf [extrait le 2016-07-08]
- EBISAWA AKIRA ET AL: "Application of Synchronous Averaging Method in Frequency Domain for Asynchronous System to Sound Distance Measurement", CONFERENCE: 40TH INTERNATIONAL CONFERENCE: SPATIAL AUDIO: SENSE THE SOUND OF SPACE; OCTOBER 2010, AES, 60 EAST 42ND STREET, ROOM 2520 NEW YORK 10165-2520, USA, 8 octobre 2010 (2010-10-08), XP040567120,

## Description

### Arrière-plan de l'invention

L'invention se situe dans le domaine technique de la mesure des paramètres acoustiques d'un environnement.

On connaît en particulier, par le document « Comparison of different impulse response measurements techniques » de Stan Guy-Bart, Embrechts Jean-Jacques, Archambeau Dominique, Journal of the Audio Engineering Society, Volume 50 N°4 pages 249-262, Avril 2002, différentes techniques de mesures de réponses impulsionnelles.

En outre, des autres techniques de mesures de réponses impulsionelles sont connues du document «Caractérisation et optimisation de la restitution haute-fidélité en véhicule» de Guillaume Vandernoot,Thèse de doctorat de l'Université Paris 6, 5 décembre 2001.

De façon connue, ces techniques permettent d'obtenir une réponse impulsionnelle de l'environnement à partir de laquelle on peut déduire des grandeurs relatives au confort et à la performance acoustiques des bâtiments.

Malheureusement, ces techniques nécessitent des équipements complexes et ne peuvent en pratique être mises en oeuvre que par du personnel qualifié.

Elles nécessitent également que les dispositifs utilisés pour émettre et recevoir le signal sonore utilisé pour le calcul de la réponse impulsionnelle soient synchronisés entre eux.

L'invention vise un procédé de mesure de paramètres acoustiques d'un environnement qui puisse être mis en oeuvre avec des équipements grand public sans ces contraintes fortes de synchronisation.

### Objet et résumé de l'invention

A cet effet, et selon un premier aspect, l'invention concerne un procédé d'obtention d'au moins un paramètre acoustique d'un environnement, selon la revendication 1.

Ainsi, et d'une façon générale, l'invention permet de s'affranchir du décalage temporel et du décalage de fréquence d'échantillonnage entre le dispositif émetteur du signal sonore émis et le dispositif récepteur du signal sonore reçu.

Ce décalage temporel et ce décalage de fréquence d'échantillonnage sont estimés en calculant la réponse impulsionnelle sur des portions de signal sonore choisies à cet effet.

En particulier, selon l'invention, on estime un décalage temporel absolu entre le dispositif d'émission et le dispositif de réception.

Grâce à ces caractéristiques avantageuses, le procédé selon l'invention peut être mis en oeuvre par un dispositif d'émission (par exemple une enceinte apte à exciter l'air ou un transducteur apte à exciter un solide) et un dispositif de réception (par exemple un terminal) choisis indépendamment l'un de l'autre.

Dans un mode de mise en oeuvre de l'invention, on peut utiliser plusieurs dispositifs de réception disposés dans différents endroits de l'environnement, par exemple à différents endroits d'une même pièce, de part et d'autre d'une cloison ou d'une vitre, ou à différents étages d'un bâtiment, de manière à qualifier les propriétés acoustiques de cet environnement à différents endroits en une seule mesure.

L'invention peut donc en particulier être mise en oeuvre avec du matériel « grand public ». Notamment, le dispositif d'émission peut être une enceinte « grand public » apte à exciter l'air dans l'environnement ou un transducteur de surface apte à exciter un solide dans l'environnement, en particulier une paroi telle qu'une cloison, un plancher, un plafond, etc. Le dispositif de réception peut être un terminal « grand public », par exemple un ordinateur portable ou non, un téléphone intelligent, une tablette.

Par conséquent, et selon un deuxième aspect, l'invention concerne un terminal selon la revendication 14.

Dans un mode de réalisation, les différentes étapes du procédé d'obtention de paramètres acoustiques sont déterminées par des instructions de programmes d'ordinateurs.

En conséquence, l'invention vise aussi un programme d'ordinateur sur un support d'enregistrement, ce programme étant susceptible d'être mis en oeuvre dans un terminal, ou plus généralement dans un ordinateur, ce programme comportant des instructions adaptées à la mise en oeuvre des étapes d'un procédé d'obtention de paramètres acoustiques tel que mentionné ci-dessus.

Ce programme peut utiliser n'importe quel langage de programmation, et être sous la forme de code source, code objet, ou de code intermédiaire entre code source et code objet, tel que dans une forme partiellement compilée.

L'invention vise aussi un support d'enregistrement lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une mémoire morte, une mémoire non volatile réinscriptible, par exemple une clé USB, une carte SD, une EEPROM, ou encore un moyen d'enregistrement magnétique, par exemple un disque dur.

Le support d'enregistrement peut aussi être un circuit intégré dans lequel le programme est incorporé, le circuit étant adapté pour exécuter ou pour être utilisé dans l'exécution du procédé.

Le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Dans un mode particulier de réalisation, le module de traitement du terminal selon l'invention comporte un programme d'ordinateur tel que mentionné ci-dessus, ce programme étant enregistré sur un support d'enregistrement conforme à l'invention et constitué par une mémoire non volatile réinscriptible du terminal, les instructions du programme étant interprétables par un processeur de ce terminal.

Le terminal, le programme d'ordinateur et le support d'enregistrement présentent, selon les modes de réalisation de l'invention, les mêmes caractéristiques que le procédé selon l'invention et dont certaines vont maintenant être présentées.

Dans un mode particulier de réalisation, les paramètres acoustiques obtenus par le procédé selon l'invention sont des paramètres définis par la norme ISO 3382. Ces paramètres peuvent notamment être choisis parmi la durée de réverbération T, la force sonore G, la définition D50, la clarté C80, le temps central Ts, la durée de décroissance précoce EDT, l'énergie latérale LF et LFC, le niveau de pression acoustique SPL, le coefficient de corrélation interaurale IACC. Les paramètres acoustiques obtenus par le procédé selon l'invention peuvent aussi être des paramètres d'isolation des bruits tels que définis par la norme ISO 16283-1 pour l'isolation des bruits aériens et ISO 16283-2 pour l'isolation des bruits d'impact.

Dans un mode particulier de réalisation, le signal sonore émis est un signal sonore générique choisi indépendamment de l'environnement. Un tel signal sonore peut permettre des mesures précises pour tout type d'environnement mais nécessite éventuellement un temps de traitement relativement important.

En variante, le signal sonore émis est optimisé pour un environnement donné. Cette caractéristique de l'invention permet de réduire le temps de mesure et donc le délai d'obtention du ou des paramètres acoustiques de l'environnement pour chacun des dispositifs de réception.

Ainsi, dans un mode de réalisation, l'invention propose de choisir un environnement, par exemple dans une liste prédéfinie, et le signal sonore émis par le dispositif d'émission est choisi, optimisé ou généré à partir de ce choix.

Un environnement peut par exemple être défini par un contexte comportant :
- un type de lieu (pièce fermée, salle de concert, couloir, ensemble de plusieurs pièces séparées par des cloisons, espace ouvert ou semi-ouvert,...) ; et
- un usage (entretien individuel, travail de groupe, cours monodirectionnel donné par un professeur à des élèves, réunion, présentation orale effectuée par une personne devant un écran,...).

Dans un mode particulier de réalisation, le procédé selon l'invention comporte une étape préliminaire d'obtention d'au moins une caractéristique de l'environnement, cette caractéristique étant prise en compte pour choisir, optimiser ou générer le signal sonore émis. Ce mode de réalisation permet d'affiner le paramétrage de ce signal pour améliorer la fiabilité des mesures ou réduire leur durée mais nécessite un paramétrage plus complexe par l'utilisateur.

Une dimension géométrique du lieu de la mesure (surface, volume,...), la distance entre le dispositif d'émission et le dispositif de réception peuvent constituer de telles caractéristiques de l'environnement.

Dans un mode particulier de réalisation, le procédé selon l'invention comporte une étape de découpe du signal sonore reçu par le dispositif de réception pour isoler les portions de signal utilisées pour les différents traitements (estimation du décalage de fréquence d'échantillonnage, estimation du décalage temporel, calcul de la réponse impulsionnelle de l'environnement). Ce découpage peut être effectué sur la base des portions correspondantes du signal sonore émis mémorisé dans la librairie du terminal.

Cette caractéristique permet d'améliorer la qualité de ces différents traitements.

Dans un mode particulier de réalisation du procédé selon l'invention, l'estimation du décalage de fréquence d'échantillonnage entre le dispositif d'émission et un dispositif de réception comporte l'obtention d'une première estimation de ce décalage par une maximisation, en faisant varier la fréquence d'échantillonnage du signal sonore reçu, de l'amplitude maximale de la réponse impulsionnelle obtenue à partir d'une portion du signal sonore émis et d'une portion correspondante du signal sonore reçu.

Dans un mode particulier de réalisation du procédé selon l'invention, l'estimation du décalage de fréquence d'échantillonnage entre le dispositif d'émission et un dispositif de réception comporte un affinage de la première estimation à partir d'une comparaison, pour plusieurs portions successives du signal sonore émis, entre :
- d'une part, la position de l'amplitude maximale de la réponse impulsionnelle obtenue à partir de la portion du signal sonore émis et d'une portion correspondante du signal sonore reçu ré-échantillonné à la fréquence d'échantillonnage correspondant à la maximisation précitée, et
- d'autre part, la position de l'amplitude maximale de la réponse impulsionnelle idéale obtenue à partir de la portion du signal sonore émis et d'un signal sonore reçu théorique identique à cette portion du signal sonore émis.

Dans un mode particulier de réalisation, cette réponse impulsionnelle idéale est obtenue par autocorrélation de ladite portion du signal émis.

Dans un mode particulier de réalisation du procédé selon l'invention, l'estimation du décalage temporel entre le dispositif d'émission et un dispositif de réception est obtenue à partir d'une comparaison, pour au moins une portion du signal sonore émis, entre :
- d'une part, la position de l'amplitude maximale de la réponse impulsionnelle obtenue à partir de la portion du signal sonore émis et d'une portion correspondante du signal sonore reçu, et
- d'autre part, la position de l'amplitude maximale de la réponse impulsionnelle idéale obtenue à partir de la portion du signal sonore émis et d'un signal sonore reçu théorique identique à cette portion du signal sonore émis.

Dans un mode particulier de réalisation du procédé selon l'invention, l'estimation du décalage temporel entre le dispositif d'émission et un dispositif de réception est obtenue à partir d'une comparaison, pour au moins une portion du signal sonore émis, entre :
- d'une part, la position de l'amplitude maximale de la réponse impulsionnelle obtenue à partir de la portion du signal sonore émis et d'une portion correspondante du signal sonore reçu ré-échantillonné à la fréquence d'échantillonnage correspondant à la maximisation précitée, et
- d'autre part, la position de l'amplitude maximale de la réponse impulsionnelle idéale obtenue à partir de la portion du signal sonore émis et d'un signal sonore reçu théorique identique à cette portion du signal sonore émis.

Dans un mode particulier de réalisation, le procédé selon l'invention comporte une étape de suppression de séquences invalides du signal sonore reçu corrigé, ces séquences invalides correspondant à des pertes de paquets du signal sonore émis.

Dans un mode particulier de réalisation du procédé selon l'invention, les séquences considérées invalides sont celles comprises entre deux portions prédéterminées consécutives du signal sonore reçu corrigé et séparées entre-elles par une durée s'écartant au-delà d'un seuil d'une durée présumée.

Dans un mode particulier de réalisation du procédé selon l'invention, le signal sonore émis comporte des portions de signal qui forment des balises temporelles, et on identifie des séquences invalides du signal sonore reçu corrigé en comparant :
- la durée entre deux balises consécutives pour la réponse impulsionnelle obtenue à partir d'au moins une portion du signal sonore émis comportant ces deux balises et d'une portion correspondante du signal sonore reçu corrigé, et
- la durée entre ces deux balises consécutives pour le signal sonore émis.

Dans un mode particulier de réalisation du procédé selon l'invention, la réponse impulsionnelle de l'environnement est calculée à partir d'au moins une portion du signal sonore reçu corrigé dans laquelle les séquences invalides ont été supprimées et d'une portion correspondante du signal sonore émis dans laquelle les séquences correspondant aux séquences invalides ont été supprimées.

Dans un mode particulier de réalisation, le signal sonore émis comporte au moins une portion comprenant la répétition d'au moins une séquence, ladite réponse impulsionnelle de l'environnement étant obtenue en effectuant :
- le calcul de la réponse impulsionnelle à partir de chacune de ces séquences et des séquences correspondantes du signal sonore reçu ;
- la moyenne de ces réponses impulsionnelles au sein de chacune desdites portions ; puis
- la moyenne de ces moyennes pour toutes les portions.

Cette caractéristique permet avantageusement de résoudre ou diminuer les effets de problèmes de non-linéarité.

Dans un mode particulier de réalisation, les portions du signal sonore émis comportent au moins une séquence choisie parmi :
- une séquence MLS ("Maximum Length Sequence") ;
- une séquence IRS ("Inverse Repeated Sequence") ;
- une séquence TSP ("Time-Streched Pulses") ;
- une séquence "Logarithmic SineSweep".

Dans un mode particulier de réalisation, pour obtenir une réponse impulsionnelle à partir d'une portion de signal sonore reçu et d'une portion correspondante de signal sonore émis, on choisit une méthode de déconvolution exacte adaptée au type de séquence présent dans la portion de signal sonore émis. On entend par "méthode de déconvolution exacte adaptée au type de séquence" une méthode qui, pour le type de séquence considérée, met en jeu une opération mathématique inverse exacte, telle que notamment : une intercorrélation circulaire dans le cas de séquences MLS ou IRS ; un filtre de compression dans le cas de séquences TSP ; un filtre inverse dans le cas de séquences Logarithmic SineSweep. Le choix d'une méthode de déconvolution exacte adaptée au type de séquence présent dans la portion de signal sonore émis garantit d'obtenir une réponse impulsionnelle exacte, ce qui n'est pas le cas de méthodes approchées telles que des méthodes itératives de fitting entre un signal sonore émis et un signal sonore reçu. Il en résulte une bonne fiabilité du procédé selon l'invention.

Dans un mode de réalisation avantageux, la portion du signal sonore émis qui est utilisée pour permettre une première estimation du décalage de fréquence d'échantillonnage et/ou une première estimation du décalage temporel entre le dispositif d'émission et un dispositif de réception comporte au moins une séquence choisie parmi une séquence MLS ("Maximum Length Sequence") et une séquence IRS ("Inverse Repeated Sequence"). L'utilisation de telles séquences MLS ou IRS a l'avantage de permettre une estimation du décalage de fréquence d'échantillonnage et/ou du décalage temporel en analysant une séquence unique du signal sonore émis, c'est-à-dire sans avoir à moyenner sur plusieurs séquences, même lorsque le niveau du signal sonore émis par le dispositif d'émission est inférieur à celui du bruit de fond (la séquence étant choisie avec une durée suffisante).

L'invention concerne aussi un système d'obtention d'au moins un paramètre acoustique d'un environnement, selon la revendication 13.

Les caractéristiques et avantages particuliers du système selon l'invention sont identiques ou similaires à ceux du procédé selon l'invention et ne seront pas rappelés ici.

Dans un mode particulier de réalisation, les différents modules du système sont incorporés dans le dispositif de réception du signal sonore reçu.

En variante, ces modules peuvent être mis en oeuvre dans un autre équipement, par exemple dans un ordinateur relié au dispositif de réception par un réseau de communication. Dans cette variante, le dispositif de réception transmet le signal sonore reçu à cet équipement distant qui se charge de tous les calculs nécessaires à la détermination des paramètres acoustiques de l'environnement. A cet effet, il est nécessaire que cet équipement obtienne au préalable les caractéristiques du signal émis, soit de ce dispositif de réception, soit par exemple d'une base de données.

### Brève description des dessins

D'autres caractéristiques et avantages de la présente invention ressortiront de la description faite ci-dessous, en référence aux dessins et à l'annexe 1 qui en illustrent un exemple de réalisation dépourvu de tout caractère limitatif et dans lesquels :
- la figure 1 représente un terminal conforme à l'invention dans un mode particulier de réalisation ;
- la figure 2 représente, de façon schématique, un premier exemple de mise en oeuvre de l'invention dans un environnement de mesure particulier ;
- la figure 3 représente une mémoire d'un terminal conforme à un mode particulier de réalisation de l'invention ;
- la figure 4 représente un exemple de signal sonore pouvant être utilisé dans un mode particulier de réalisation de l'invention ;
- la figure 5 représente, sous forme d'organigramme, les principales étapes d'un procédé d'obtention de paramètres acoustiques d'un environnement dans un mode particulier de réalisation de l'invention ;
- la figure 6 représente, de façon schématique, un deuxième exemple de mise en oeuvre de l'invention dans un environnement de mesure particulier ; et
- l'annexe 1 fournit un exemple de signal sonore émis pouvant être utilisé dans un mode particulier de réalisation de l'invention.

### Description détaillée d'un premier mode de réalisation

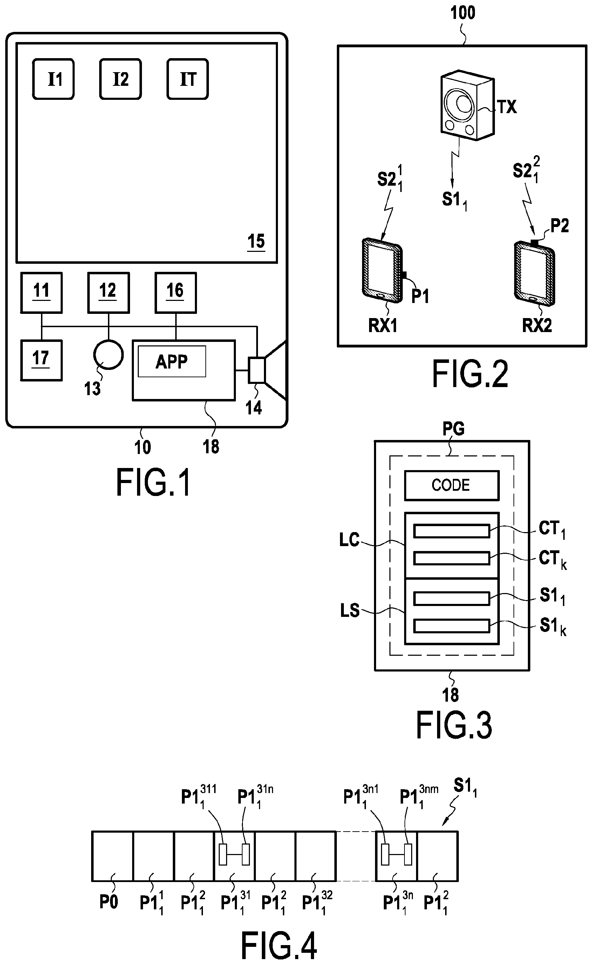

La figure 1 représente de façon schématique un terminal 10 conforme à un mode particulier de réalisation de l'invention. Ce terminal est dans cet exemple constitué par un téléphone intelligent (en anglais "smartphone"), offrant à l'utilisateur, au-delà des fonctions de téléphonie, et plus généralement de communication, l'accès à diverses applications dès lors que celles-ci ont été installées dans le terminal.

D'un point de vue matériel, ce terminal comporte notamment un processeur 11, une mémoire morte de type ROM 12 dans laquelle sont enregistrées des fonctions systèmes, en particulier des pilotes logiciel (en anglais "drivers") et le système d'exploitation du terminal, un microphone 13, un haut-parleur 14, un écran 15, une carte son 16, un ou plusieurs modules de communication (3G, 4G, Bluetooth, WiFi, ...) 17 et une mémoire non volatile réinscriptible 18 comportant des applications APP et des données utilisateurs non représentées sur cette figure, ces éléments étant reliés entre eux par un système de bus.

De façon connue, l'écran 15 constitue une interface homme-machine tactile sur laquelle sont représentées des icônes I1, 12, IT, correspondant aux applications système et aux différentes applications APP installées par l'utilisateur du terminal.

Parmi ces icônes, une icône IT permet au terminal d'accéder à distance, via un réseau de télécommunications, à un portail d'applications téléchargeables compatibles avec le système d'exploitation du terminal et d'installer, éventuellement moyennant paiement et/ou authentification, de nouvelles applications APP dans la mémoire non volatile réinscriptible 18.

Dans le mode de réalisation décrit ici, un programme d'ordinateur PG conforme à l'invention peut être téléchargé à partir de ce portail d'applications, et une icône associée présentée sur l'interface tactile 15.

En référence à la figure 2, nous supposerons dans cet exemple qu'un utilisateur possédant deux terminaux RX1, RX2 identiques ou similaires au terminal 10 de la figure 1 pour les parties fonctionnelles en commun avec ce dernier (dispositifs de réception au sens de l'invention), désire qualifier en une seule mesure, l'acoustique d'un environnement 100 en deux endroits, cet environnement étant constitué dans cet exemple par une salle de classe comportant une estrade et plusieurs rangées de bureaux en vis-à-vis de cette estrade.

Si cela n'a pas déjà été fait, l'utilisateur télécharge et installe le programme d'ordinateur PG dans la mémoire non volatile 18 de chacun des terminaux RX1, RX2, positionne ces terminaux aux positions P1, P2 et place une enceinte TX (dispositif d'émission au sens de l'invention) au niveau de l'estrade.

Cette enceinte TX comporte des moyens de communication non représentés et compatibles avec ceux des terminaux RX1, RX2 de sorte à pouvoir recevoir de l'un de ces terminaux un signal sonore S1ₖ à restituer sous forme d'un signal sonore émis dans l'environnement 100. Dans cet exemple, l'enceinte TX est une enceinte autonome comportant de manière classique un haut-parleur, une batterie, un circuit de gestion de puissance, un module de connectivité sans fil, un convertisseur numérique analogique, un amplificateur audio.

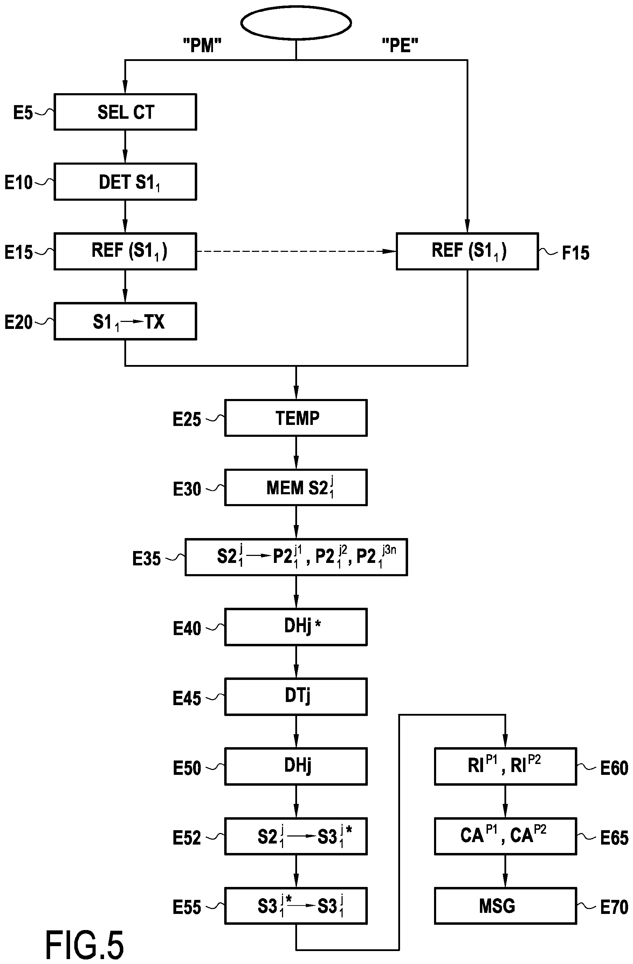

La figure 3 représente une partie de la mémoire non volatile 18 de chacun des terminaux RX1, RX2 après installation du programme d'ordinateur PG. Cette mémoire comporte :
- une partie « CODE » correspondant aux instructions compilées ou non, du programme d'ordinateur PG et interprétables par le processeur 11, ces instructions permettant de mettre en oeuvre les étapes E5 à E70 du procédé selon l'invention et représentées à la figure 5 ;
- une bibliothèque « LC » de contextes CTₖ sélectionnables par l'utilisateur via l'interface homme-machine 15 du terminal, chaque contexte de mesure étant défini par un couple {type d'environnement/usage} ; et
- une bibliothèque « LS » de signaux sonores S1ₖ prédéfinis ou paramétrables associés à ces contextes.

Dans le mode de réalisation décrit ici, des mises à jour du programme d'ordinateur PG peuvent être téléchargées du portail et installées dans la mémoire 18, par exemple lorsque de nouveaux contextes CTₖ ou de nouveaux signaux sonores S1ₖ sont disponibles.

Nous supposerons dans cet exemple que le programme d'ordinateur PG offre deux modes de fonctionnement référencés « Maître » / « Esclave », respectivement mis en oeuvre par les terminaux RX1, RX2 dans l'exemple décrit ici, et dans lesquels :
- le mode « Maître » permet au terminal RX1 de choisir un contexte CT₁ dans la bibliothèque LC via l'interface 15, de déterminer un signal sonore ci-après référencé S1₁ associé à ce contexte dans la bibliothèque de sons LS, d'envoyer la référence de ce signal sonore aux terminaux RX2 en mode « Esclave » par des moyens de communication 17, d'envoyer le signal sonore à l'enceinte TX par des moyens de communication 17 pour que celle-ci le restitue sous forme d'un signal sonore émis S1₁ dans l'environnement, de commander la capture d'un signal sonore reçu S2₁¹ par le microphone 13 après une temporisation prédéterminée, d'enregistrer ce signal sonore reçu S2₁¹ dans la mémoire non volatile 18 par la carte son 16, de déterminer des paramètres acoustiques CA^{P1} de l'environnement en la position P1 du terminal RX1 à partir du signal sonore émis S1₁ par l'enceinte TX et du signal sonore reçu S2₁¹, et de présenter un message d'information MSG à l'utilisateur du terminal généré à partir de ces paramètres ;
- le mode « Esclave» permet au terminal RX2, de recevoir, en provenance d'un terminal « Maître » RX1, la référence d'un signal sonore S1₁ par les moyens de communication 17, de commander la capture d'un signal sonore reçu S2₁² par le microphone 13 après une temporisation prédéterminée, d'enregistrer ce signal sonore reçu S2₁² dans la mémoire non volatile 18 par la carte son 16, de déterminer des paramètres acoustiques CA^{P2} de l'environnement en la position P2 du terminal RX2 à partir du signal sonore émis S1₁ émis par l'enceinte TX et du signal sonore reçu S2₁² et de présenter un message d'information MSG à l'utilisateur du terminal, généré à partir de ces paramètres.

D'une façon générale, les signaux sonores émis S1ₖ sont préférentiellement des signaux sonores ayant une densité spectrale non négligeable pour toutes les fréquences comprises entre 10 Hz et 22050 Hz et présentant de bonnes propriétés d'autocorrélation. En particulier, les signaux sonores émis S1ₖ sont des bruits, tels que des bruits blancs ou des bruits roses.

A titre d'exemple, on peut considérer :
- qu'un signal sonore présente une densité spectrale non négligeable pour toutes les fréquences comprises entre 10 Hz et 22050 Hz lorsque chaque fréquence dans cette gamme présente une densité spectrale supérieure à 10% de la densité spectrale maximale ; et
- qu'un signal sonore présente de bonnes propriétés d'autocorrélation lorsqu'il présente un pic d'autocorrélation très prononcé, en particulier la valeur de l'autocorrélation aux temps supérieurs à 0,1s est inférieure à 2%, de préférence inférieure à 1%, encore de préférence inférieure à 0,5% de la valeur de l'autocorrélation à 0s.

Dans le mode de réalisation décrit ici, et comme décrit en référence à la figure 4, le signal sonore émis S1₁ comporte, après un en-tête de remplissage P0 (en anglais "padding bits"), une première portion P1₁¹, puis des troisièmes portions P1₁³ⁿ encadrées par des deuxièmes portions ou « balises » P1₁².

Chacune de ces portions P1₁¹, P1₁², P1₁³ⁿ doit être choisie de durée suffisamment longue par rapport au temps de réverbération présumé d'un signal sonore dans l'environnement 100.

La première portion P1₁¹ est dans cet exemple utilisée pour permettre :
- une première estimation DHi* du décalage de fréquence d'échantillonnage DHi ; et
- une estimation du décalage temporel DTi,
entre le dispositif d'émission TX et chacun des dispositifs de réception RXi.

Cette première portion P1₁¹ est plus longue que le décalage temporel estimé entre le dispositif d'émission TX et chacun des dispositifs de réception RXi, typiquement de l'ordre de 2 secondes.

Les deuxièmes portions ou balises P1₁² du signal sonore émis S1₁ permettent, dans ce mode de réalisation :
- d'affiner l'estimation DHi* du décalage de fréquence d'échantillonnage DHi ; et
- de détecter d'éventuelles pertes de paquets qui pourraient fausser les réponses impulsionnelles qui seront obtenues à partir des troisièmes portions P1₁³ⁿ.

Les deuxièmes portions P1₁² sont un ensemble de séquences MLS de plus courtes durées.

Dans le mode de réalisation décrit ici, chaque troisième portion P1₁³ⁿ est constituée par la répétition d'au moins une séquence P1₁^{3nm}, afin de résoudre ou diminuer les effets de problèmes de non-linéarité. La durée de chacune des troisièmes portions P1₁³ⁿ doit être largement supérieure au temps de réverbération dans l'environnement 100 pour que les mesures soient précises.

En référence à la figure 5, nous allons maintenant décrire le procédé mis en oeuvre par chacun des terminaux RX1, RX2 dans ce mode particulier de réalisation.

Dans le mode décrit ici, le programme d'ordinateur PG comporte deux processus, un processus PM correspondant au mode « Maître » exécuté par le terminal RX1 et un processus PE correspondant au mode « Esclave » exécuté par le terminal RX2.

Au cours d'une étape E5, l'utilisateur sélectionne sur l'interface homme-machine 15 du terminal RX1 un contexte CT₁ « Salle de Classe » dans la librairie de contextes LC de ce terminal.

Au cours d'une étape E10, le processeur 11 du terminal RX1 détermine un signal sonore S1₁ associé à ce contexte dans la librairie LS de signaux sonores.

Au cours d'une étape E15, le terminal RX1 envoie, par des moyens de communication sans fil 17, la référence du signal sonore S1₁ au terminal RX2. Le terminal RX2 reçoit cette référence au cours d'une étape F15.

Au cours d'une étape E20, le terminal « Maître » RX1 envoie le signal sonore S1₁ à l'enceinte TX pour que celle-ci le restitue sous forme d'un signal sonore émis S1₁ dans l'environnement 100.

Dans le mode de réalisation décrit ici, le procédé mis en oeuvre par les terminaux Maître RX1 et Esclave RX2 (ci-après RXj) est ensuite identique.

Au cours d'une étape E25, les terminaux RXj attendent une durée prédéterminée avant de commencer à enregistrer le signal sonore reçu S2₁^{j}. Cette durée permet notamment le traitement de l'étape F15 par le terminal RX2 et la configuration du microphone 13 et de la carte son 16 en réception pour chacun des terminaux. La durée de l'en-tête P0 du signal sonore émis S1₁ est choisie de sorte à ce que les terminaux RXj commencent effectivement à enregistrer le signal sonore reçu S2₁^{j} avant que l'enceinte TX ne restitue la première portion du signal sonore émis P1₁¹.

Dans le mode de réalisation décrit ici, la fréquence d'échantillonnage f_{TX} du dispositif d'émission TX est de 44100Hz.

En pratique, et comme de façon connue de l'homme du métier, le signal sonore analogique à émettre est traité par le processeur ou un composant du dispositif d'émission TX, afin d'obtenir un tableau de valeurs dont le pas correspond à cette fréquence f_{TX} et qui définit, pour chaque instant tᵢ, une valeur entière correspondant à l'amplitude discrétisée Aᵢ devant être envoyée à l'instant tᵢ au haut-parleur du dispositif TX pour le faire vibrer.

Chacun des terminaux RXj mémorise le signal sonore reçu S2₁^{j} qu'il reçoit au cours d'une étape E30 dans sa mémoire non volatile réinscriptible 18.

En appelant f_{RXj} la fréquence d'échantillonnage du dispositif de réception RXj, le processeur 11 ou la carte son 16 de ce dispositif construit un tableau de valeurs dont le pas correspond à cette fréquence f_{RXj} et qui définit, pour chaque instant t, une valeur entière correspondant à l'amplitude discrétisée A(t) du signal sonore reçu S2₁^{j} par le microphone du dispositif RXⱼ à l'instant t.

Dans le mode de réalisation décrit ici, au cours d'une étape E35, le signal sonore reçu S2₁^{j} est découpé en portions P2₁^{j1}, P2₁^{j2}, P2₁^{j3n} correspondant aux portions P1₁¹, P1₁², P1₁³ⁿ du signal sonore émis S1₁.

Au cours d'une étape E40, le processeur 11 du terminal RXj effectue une première estimation DHj* du décalage de fréquence d'échantillonnage DHj entre le dispositif d'émission TX et le dispositif de réception RXj.

Cette étape consiste notamment à maximiser, en faisant varier la fréquence d'échantillonnage du signal sonore reçu (par exemple entre 44000Hz et 44100Hz), l'amplitude maximale de la réponse impulsionnelle obtenue à partir de la première portion P1₁¹ du signal sonore émis S1₁ et de la première portion P2₁^{j1} correspondante du signal sonore reçu S2₁^{j}.

La fréquence d'échantillonnage du signal sonore reçu S2₁^{j} permettant d'obtenir cette amplitude maximale, qui correspond à une première estimation DHj* du décalage de fréquence d'échantillonnage DHj, est mémorisée au cours de cette étape E40.

Cette première estimation DHj* du décalage de fréquence d'échantillonnage produit, par ré-échantillonnage du signal sonore reçu, un nouveau tableau de valeurs T2t, par exemple par interpolation linéaire des valeurs du tableau de valeurs T2ⱼ.

Au cours d'une étape E45, le processeur 11 du terminal RXj estime le décalage temporel DTj entre le dispositif d'émission TX et le dispositif de réception RXj.

Cette étape d'estimation du décalage temporel DTj consiste notamment, dans ce mode de réalisation, à comparer :
- d'une part, la position de l'amplitude maximale de la réponse impulsionnelle obtenue à partir de la première portion P1₁¹ du signal sonore émis S1₁ et de la première portion P2₁^{j1∗} correspondante du signal sonore reçu S2₁^{j} ré-échantillonné à la fréquence d'échantillonnage mémorisée à l'étape E40, et
- d'autre part, la position de l'amplitude maximale de la réponse impulsionnelle idéale obtenue à partir de la première portion P1₁¹ du signal sonore émis S1₁ et d'un signal sonore reçu théorique identique à cette première portion P1₁¹.

L'écart temporel entre ces deux positions, qui correspond à une estimation du décalage temporel DTj, est mémorisé au cours de cette étape E45.

Au cours d'une étape E50, le processeur 11 du terminal RXj affine la première estimation DHj* du décalage de fréquence d'échantillonnage DHj entre le dispositif d'émission TX et le dispositif de réception RXj.

Cette étape E50 est avantageusement réalisée après avoir corrigé le décalage temporel DTj mémorisé à l'étape E45, c'est-à-dire après avoir décalé temporellement l'ensemble du signal reçu S2₁^{j} afin d'amener l'amplitude maximale de la réponse impulsionnelle obtenue à partir de la première portion P1₁¹ du signal sonore émis S1₁ et de la première portion P2₁^{j1∗} correspondante du signal sonore reçu S2₁^{j} en correspondance avec la position de l'amplitude maximale de la réponse impulsionnelle idéale obtenue à partir de la première portion P1₁¹ du signal sonore émis S1₁ et d'un signal sonore reçu théorique identique à cette première portion P1₁¹.

L'étape E50 consiste alors notamment, dans ce mode de réalisation, à comparer pour les différentes deuxièmes portions ou balises successives P1₁² du signal sonore émis S1₁ :
- d'une part, la position de l'amplitude maximale de la réponse impulsionnelle obtenue à partir de la deuxième portion P1₁² du signal sonore émis S1₁ et de la deuxième portion P2₁^{j2∗} correspondante du signal sonore reçu S2₁^{j} ré-échantillonné à la fréquence d'échantillonnage mémorisée à l'étape E40, et
- d'autre part, la position de l'amplitude maximale de la réponse impulsionnelle idéale obtenue à partir de la deuxième portion P1₁² du signal sonore émis S1₁ et d'un signal sonore reçu théorique identique à cette deuxième portion P1₁².

Si l'écart temporel entre ces deux positions est évolutive sur les différentes deuxièmes portions ou balises successives P1₁² du signal sonore émis S1₁, l'estimation du décalage de fréquence d'échantillonnage DHj peut être affinée en déterminant la fréquence d'échantillonnage pour laquelle un écart temporel homogène est obtenu entre lesdites deux positions pour toutes les deuxièmes portions ou balises successives P1₁² du signal sonore émis S1₁.

La fréquence d'échantillonnage du signal sonore reçu S2₁^{j} permettant d'obtenir cet écart temporel homogène pour toutes les deuxièmes portions ou balises successives P1₁², qui correspond à une estimation affinée du décalage de fréquence d'échantillonnage DHj, est mémorisée au cours de cette étape E50.

Au cours de cette étape E50, une fois que l'écart temporel précité est homogène pour toutes les deuxièmes portions ou balises successives P1₁², il est également possible d'affiner l'estimation du décalage temporel DTj entre le dispositif d'émission TX et le dispositif de réception RXj, en décalant temporellement l'ensemble du signal reçu S2₁^{j} afin d'amener l'amplitude maximale de la réponse impulsionnelle obtenue à partir de chaque deuxième portion P1₁² du signal sonore émis S1₁ et de la deuxième portion P2₁^{j2∗} correspondante du signal sonore reçu S2₁^{j} en correspondance avec la position de l'amplitude maximale de la réponse impulsionnelle idéale obtenue à partir de chaque deuxième portion P1₁² du signal sonore émis S1₁ et d'un signal sonore reçu théorique identique à cette deuxième portion P1₁².

Au cours d'une étape E52, une correction de décalage de fréquence d'échantillonnage et une correction de décalage temporel sont appliquées au signal sonore reçu S2₁^{j} à partir des estimations du décalage de fréquence d'échantillonnage DHj et du décalage temporel DTj obtenues précédemment, pour produire un signal sonore reçu corrigé S3ᵢ^{j∗} au sens de l'invention.

Dans le mode de réalisation décrit ici, le procédé selon l'invention comporte également une étape E55 de suppression de séquences invalides du signal sonore reçu corrigé S3₁^{j∗}, ces séquences invalides correspondant à des pertes de paquets du signal sonore émis S1₁.

Dans le mode de réalisation décrit ici, cette détection est effectuée en vérifiant que la durée entre deux balises consécutives pour la réponse impulsionnelle obtenue à partir d'au moins une portion du signal sonore émis S1₁ comportant ces deux balises et d'une portion correspondante du signal sonore reçu corrigé S3₁^{j∗}, est sensiblement égale à la durée entre les deux balises P1₁² correspondantes pour le signal sonore émis S1₁.

Lorsqu'une durée entre deux balises consécutives pour la réponse impulsionnelle s'écarte de la durée entre les deux balises P1₁² correspondantes pour le signal sonore émis S1₁ au-delà d'un seuil prédéterminé, on considère que des paquets ont été perdus entre ces balises ; les troisièmes portions de signal sonore émis P1₁³ⁿ et P2₁^{j3n} correspondantes comprises entre ces balises sont éliminées à la fois dans le signal sonore émis S1₁ et dans le signal sonore reçu corrigé S3₁^{j∗}.

Le signal sonore reçu corrigé S3₁^{j∗} nettoyé de ces paquets perdus est noté S3₁^{j}.

On rappelle que, dans cet exemple, une troisième portion P1₁³ⁿ du signal sonore émis S1₁, comprise entre deux balises P1₁², est constituée par la répétition d'au moins une séquence MLS P1₁^{3nm}.

Dans le mode de réalisation décrit ici, au cours d'une étape E60, on calcule la réponse impulsionnelle à partir de chacune de ces séquences P1₁^{3nm}, P2₁^{j3nm}, on effectue pour toutes les valeurs de m la moyenne de ces réponses impulsionnelles au sein de la troisième portion P1₁³ⁿ, puis enfin la moyenne de ces moyennes pour toutes les valeurs de n, autrement dit pour l'ensemble des troisièmes portions P1₁³ⁿ, P2₁^{j3n} des signaux sonores S1₁, S3₁^{j}.

On obtient ainsi la réponse impulsionnelle RI^{Pj} de l'environnement 100 à la position du dispositif de réception RXj (RI^{P1}, RI^{P2} dans cet exemple).

Cette réponse impulsionnelle permet de calculer, au cours d'une étape E65, un ou plusieurs paramètres CA^{Pj} de l'environnement, par exemple des paramètres acoustiques définis par la norme ISO 3382 tels que rappelés précédemment.

Dans le mode particulier de réalisation décrit ici, le procédé selon l'invention comporte un système expert configuré pour produire, à partir de ce ou ces paramètres acoustiques, un message d'information relatif au confort acoustique, ce message étant explicite pour un utilisateur non spécialiste de l'acoustique. Ce message peut par exemple informer l'utilisateur sur le confort de l'environnement dans certaines conditions (sensibilité au bruit de la circulation automobile, aux bruits de voisinage,...).

Ce message est restitué par l'interface homme-machine 15 du terminal au cours d'une étape E70.

De manière avantageuse, le procédé et le système selon l'invention peuvent également comporter un module configuré pour fournir à un utilisateur, à partir des données récoltées sur l'environnement et des paramètres acoustiques de l'environnement déterminés selon l'invention, une simulation de confort acoustique modifié après changement de l'isolation de l'environnement, notamment après rénovation.

### Deuxième mode de réalisation

Dans le premier mode de réalisation décrit ci-dessus, le dispositif d'émission est une enceinte TX apte à exciter l'air dans l'environnement 100. Plus précisément, le signal sonore émis S1₁ est généré dans l'air par une membrane de l'enceinte et se propage dans un premier temps dans l'air, puis éventuellement dans certains solides de l'environnement (cloisons, planchers, etc.), jusqu'aux dispositifs de réception RX1, RX2.

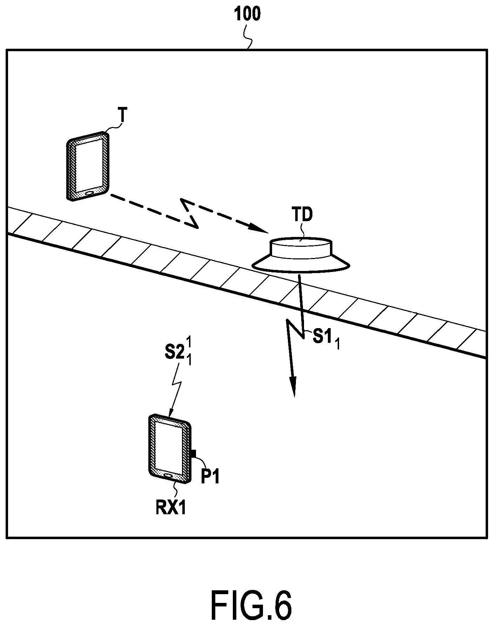

En variante, dans le deuxième mode de réalisation représenté à la figure 6, le dispositif d'émission est un transducteur de surface TD apte à exciter un solide auquel il est accolé dans l'environnement 100. En particulier, dans l'exemple représenté sur la figure 6, le transducteur TD est accolé à un plancher d'une première pièce de l'environnement 100. Le signal émis généré par le transducteur TD dans le solide auquel il est associé (ici le plancher) est un signal sonore au sens de l'invention. Ce signal sonore émis S1₁ se propage dans un premier temps dans le solide (plancher), puis dans l'air, puis éventuellement dans d'autres solides de l'environnement, jusqu'à un ou plusieurs dispositifs de réception.

Dans l'exemple de la figure 6, le signal sonore se propage notamment jusqu'à un dispositif de réception RX1 positionné à une position P1 dans une deuxième pièce de l'environnement 100 située sous le plancher excité par le transducteur TD. Un tel agencement peut permettre d'évaluer la transmission de bruits par voie solidienne à travers une paroi (le plancher dans l'exemple de la figure 6), et de déterminer ainsi les propriétés de cette paroi pour l'isolation des bruits d'impact.

Dans l'exemple de la figure 6, le transducteur TD reçoit le signal sonore à émettre d'un terminal T positionné dans la première pièce, où le transducteur TD est installé sur le plancher de cette première pièce. Le transducteur TD comporte des moyens de communication non représentés et compatibles avec ceux du terminal T, notamment des moyens de communication sans fil, de sorte à pouvoir recevoir de ce terminal un signal sonore à restituer sous forme d'un signal sonore émis S1₁ dans l'environnement 100. Dans cet exemple, le transducteur TD est un dispositif autonome comportant de manière classique un vibrateur, une batterie, un circuit de gestion de puissance, un module de connectivité sans fil, un convertisseur numérique analogique, un amplificateur audio. Par ailleurs, le terminal T positionné dans la première pièce et le dispositif de réception RX1 positionné dans la deuxième pièce sont chacun identiques ou similaires au terminal 10 de la figure 1 pour les parties fonctionnelles en commun avec ce dernier.

Au cours d'une étape analogue à l'étape E5 de la figure 5, l'utilisateur sélectionne sur l'interface homme-machine 15 du terminal T positionné dans la première pièce un contexte « Pièces séparées par un plancher » dans la librairie de contextes LC de ce terminal et, au cours d'une étape analogue à l'étape E10 de la figure 5, le processeur 11 du terminal T détermine un signal sonore associé à ce contexte dans la librairie LS de signaux sonores. Au cours d'une étape analogue à l'étape E15, le terminal T envoie ensuite, par des moyens de communication sans fil 17, la référence du signal sonore S1₁ au terminal RX1. Le terminal RX1 reçoit cette référence au cours d'une étape analogue à l'étape F15. Ensuite, au cours d'une étape analogue à l'étape E20 de la figure 5, le terminal T envoie le signal sonore au transducteur TD pour que celui-ci le restitue sous forme d'un signal sonore émis S1₁ dans le plancher de la première pièce. Les étapes suivantes du procédé mis en oeuvre par le terminal RX1 de réception du signal sonore reçu S2₁¹ positionné dans la deuxième pièce située sous le plancher est identique à celui détaillé précédemment en référence à la figure 5, comprenant les étapes E25 à E70.

### Troisième mode de réalisation

Dans les modes de réalisation décrits ci-dessus, l'utilisateur sélectionne un contexte de mesure dans une liste prédéfinie de l'interface homme-machine 15.

En variante, dans un troisième mode de réalisation, l'interface homme-machine peut présenter un menu plus évolué, par exemple dans un mode « expert », permettant à l'utilisateur de définir des paramètres de l'environnement, par exemple relatifs à la géométrie (surface, volume) de l'environnement, à sa structure (types de matériaux), ou à la distance entre le dispositif d'émission TX, TD et le ou les dispositifs de réception RX.

Dans ce troisième mode de réalisation, le signal sonore émis S1ₖ est optimisé en fonction de ces paramètres de l'environnement.

### Quatrième mode de réalisation

Dans un quatrième mode de réalisation, le procédé comporte une étape de filtrage du signal sonore émis S1ₖ et une étape correspondante de filtrage du signal sonore reçu corrigé S3ₖ^{j}.

Ces étapes peuvent respectivement être mises en oeuvre après les étapes E10 et E55 du procédé de la figure 5. Lorsque cette étape de filtrage est effectuée, le terminal Maître en informe le terminal Esclave dans le message envoyé à l'étape E15.

Ce filtrage peut notamment permettre, en éliminant certaines fréquences, d'optimiser la durée de la mesure et de rendre le signal sonore émis S1ₖ plus agréable pour l'utilisateur en éliminant des fréquences gênantes pour un humain.

### Cinquième mode de réalisation

Dans un cinquième mode de réalisation, le procédé diffère de celui du premier mode de réalisation en ce que l'étape E50 d'affinage de la première estimation DHj* du décalage de fréquence d'échantillonnage DHj entre le dispositif d'émission TX et le dispositif de réception RXj est mise en oeuvre directement après la première estimation DHj* du décalage de fréquence d'échantillonnage, sans passer par l'étape d'estimation du décalage temporel DTj. Autrement dit, l'étape E50 d'affinage de la première estimation DHj* du décalage de fréquence d'échantillonnage est mise en oeuvre sans correction préalable du décalage temporel DTj.

Ce cinquième mode de réalisation impose toutefois que les deuxièmes portions ou balises successives P1₁² du signal sonore émis S1₁ soient plus longues que le décalage temporel DTj, de sorte qu'il existe un chevauchement entre chaque deuxième portion P1₁² du signal sonore émis S1₁ et la deuxième portion P2₁^{j2∗} correspondante du signal sonore reçu S2₁^{j} ré-échantillonné à la fréquence d'échantillonnage mémorisée à l'étape E40.

L'invention n'est pas limitée aux exemples décrits et représentés.

En particulier, dans le premier mode de réalisation, deux dispositifs de réception RX1 et RX2 sont prévus afin de déterminer des paramètres acoustiques de l'environnement à deux positions distinctes. En variante, un procédé et un système selon l'invention peuvent mettre en jeu la réception d'un signal sonore reçu par un seul dispositif de réception, notamment un seul terminal qui exécute les étapes du processus PM correspondant au mode « Maître » tel que décrit précédemment, à l'exception de l'étape E15 de transmission de la référence du signal sonore S1₁ à un autre dispositif de réception puisqu'il n'y a dans ce cas qu'un seul dispositif de réception.

De plus, dans le premier mode de réalisation décrit en référence à la figure 2, le dispositif d'émission TX est une enceinte autonome. En variante, le dispositif d'émission TX peut être un terminal identique ou similaire au terminal 10 de la figure 1 pour les parties fonctionnelles en commun avec ce dernier, qui émet le signal émis S1₁ par l'intermédiaire de son haut-parleur 14.

Par ailleurs, dans le cas où plusieurs dispositifs de réception RXj sont prévus afin de déterminer des paramètres acoustiques de l'environnement à des positions distinctes Pj, le procédé et le système selon l'invention peuvent être configurés pour présenter à l'utilisateur sur un terminal central (par exemple le terminal « Maître » dans le premier mode de réalisation) un message unique qui peut comprendre l'ensemble des paramètres locaux CA^{Pj} de l'environnement, éventuellement un ou plusieurs paramètres globaux caractéristiques de l'environnement, et éventuellement un message d'information relatif au confort acoustique tel que mentionné précédemment.

Enfin, le procédé et le système selon l'invention peuvent être mis en oeuvre pour obtenir au moins un paramètre acoustique dans différents types d'environnement, par exemple dans un bâtiment ou dans un véhicule.

### ANNEXE 1

Cette annexe fournit les caractéristiques d'un signal émis S1₁ pouvant être utilisé dans un mode particulier de réalisation de l'invention.

Dans cet exemple, chaque portion P1₁^{k} du signal sonore émis S1₁ est composée d'une ou plusieurs séquences de longueur maximale d'un registre à décalage à rétroaction linéaire (Linear feedback shift register) de longueur maximale, aussi appelée Maximum Length Sequence (MLS).

Pour une description des propriétés de ces séquences, ainsi que pour la manière de les générer, l'homme du métier pourra se reporter au document « Shift register sequences », Solomon Wolf Golomb, Holden-Day, 1967.

Ces séquences sont caractérisées par un polynôme dit « caractéristique » dont la connaissance permet d'engendrer une séquence unique. Dans la suite, chaque polynôme sera caractérisé par une liste de ses degrés non-nuls.

Par exemple, le polynôme x⁵+x⁴+x²+1 sera représenté par [5, 4, 2, 0].

Pour une séquence de degré n (degré maximal du polynôme caractéristique), sa longueur sera de 2ⁿ-1. Une séquence sera alors constituée d'une suite de taille 2ⁿ-1 de 0 et de 1.

Afin de générer un signal sonore, il est préférable (mais non nécessaire) de multiplier tous les éléments de cette séquence par 2 et de leur retrancher 1, afin d'obtenir une suite de -1 et 1.

Un exemple de séquence typiquement utilisé pour déterminer les caractéristiques acoustiques d'une pièce moyenne telle qu'un bureau, est constitué des portions de signal successives suivantes :
Portion P0 : vide
Portion P1₁¹ : suite de 2 séquences MLS engendrées avec [15, 14, 0]. Dans ce cas particulier, chaque bit de la séquence est répété 4 fois : 001011 -> 0000 0000 1111 0000 1111 1111
Portion P1₁² : suite de 5 séquences MLS engendrées avec [13, 12, 11, 8, 0].
Portion P1₁³¹ : suite de 5 séquences MLS telles que :
   Portion P1₁³¹¹ : 1 séquence MLS engendrée avec [16, 15, 13, 4, 0].
   Portion P1₁³¹² : 1 séquence MLS engendrée avec [16, 15, 12, 10, 0].
   Portion P1₁³¹³ : 1 séquence MLS engendrée avec [16, 15, 12, 1, 0].
   Portion P1₁³¹⁴ : 1 séquence MLS engendrée avec [16, 15, 10, 4, 0].
   Portion P1₁³¹⁵ : 1 séquence MLS engendrée avec [16, 15, 9, 6, 0].
Portion P1₁² : suite de 5 séquences MLS engendrées avec [13, 12, 11, 8, 0].
Portion P1₁³² : suite de 5 séquences MLS telles que :
   Portion P1₁³²¹ : 1 séquence MLS engendrée avec [16, 15, 9, 4, 0].
   Portion P1₁³²²: 1 séquence MLS engendrée avec [16, 15, 7, 2, 0].
   Portion P1₁³²³: 1 séquence MLS engendrée avec [16, 15, 4, 2, 0].
   Portion P1₁³²⁴: 1 séquence MLS engendrée avec [16, 11, 13, 11, 0].
   Portion P1₁³²⁵ : 1 séquence MLS engendrée avec [16, 14, 13, 5, 0].
Portion P1₁² : suite de 5 séquences MLS engendrées avec [13, 12, 11, 8, 0].
Portion P1₁³³ : suite de 5 séquences MLS telles que :
   Portion P1₁³³¹ : 1 séquence MLS engendrée avec [16, 14, 12, 7, 0].
   Portion P1₁³³² : 1 séquence MLS engendrée avec [16, 14, 11, 7, 0].
   Portion P1₁³³³ : 1 séquence MLS engendrée avec [16, 14, 9, 7, 0].
   Portion P1₁³³⁴ : 1 séquence MLS engendrée avec [16, 14, 9, 4, 0].
   Portion P1₁³³⁵ : 1 séquence MLS engendrée avec [16, 14, 8, 3, 0].
Portion P1₁² : suite de 5 séquences MLS engendrées avec [13, 12, 11, 8, 0].
Portion P1₁³⁴ : suite de 5 séquences MLS telles que :
   Portion P1₁³⁴¹ : 1 séquence MLS engendrée avec [16, 13, 12, 11, 0].
   Portion P1₁³⁴² : 1 séquence MLS engendrée avec [16, 13, 12, 7, 0].
   Portion P1₁³⁴³ : 1 séquence MLS engendrée avec [16, 13, 11, 6, 0].
   Portion P1₁³⁴⁴ : 1 séquence MLS engendrée avec [16, 13, 9, 6, 0].
   Portion P1₁³⁴⁵ : 1 séquence MLS engendrée avec [16, 13, 6, 4, 0].
Portion P1₁² : suite de 5 séquences MLS engendrées avec [13, 12, 11, 8, 0].

## Revendications

1. Procédé d'obtention d'au moins un paramètre acoustique (CA^{Pj}) d'un environnement (100), ce procédé comportant :
- une étape (E20) d'émission d'un signal sonore émis (S1₁) par un dispositif d'émission (TX ; TD) ;
- une étape (E30) de réception d'un signal sonore reçu (S2₁^{j}) par au moins un dispositif de réception (RXj) ; et pour chacun desdits dispositifs de réception (RXj) :
- une étape (E60) de détermination de la réponse impulsionnelle (RI^{Pj}) de l'environnement (100) à la position (Pj) dudit dispositif de réception (RXj) ;
- une étape (E65) d'obtention d'un paramètre acoustique (CA^{Pj}) de l'environnement (100) à partir de cette réponse impulsionnelle (RI^{Pj}) ;
- une estimation (E40, E50) d'un décalage de fréquence d'échantillonnage (DHj) entre le dispositif d'émission (TX ; TD) et ledit dispositif de réception (RXj) à partir d'au moins une réponse impulsionnelle obtenue à partir d'au moins une portion du signal sonore reçu (P2₁^{j1}, P2₁^{j2∗}) et d'une portion (P1₁¹, P1₁²) correspondante du signal sonore émis ;
- l'obtention d'un premier signal sonore (S3₁^{j}) obtenu en appliquant (E52), au signal sonore reçu (S2₁^{j}) par ce dispositif de réception (RXj), une correction de décalage de fréquence d'échantillonnage ; et
- une estimation (E45) d'un décalage temporel (DTj) entre le dispositif d'émission (TX ; TD) et ledit dispositif de réception (RXj) à partir d'au moins une réponse impulsionnelle obtenue à partir d'au moins une portion (P2₁^{j1}) du premier signal sonore reçu corrigé et d'une portion (P1₁¹) correspondante du signal sonore émis ;
ledit procédé étant **caractérisé en ce qu'**il comporte:
- l'obtention d'un signal sonore reçu corrigé (S3₁^{j}) obtenu en appliquant (E52), au premier signal sonore reçu corrigé (S2₁^{j}) par ce dispositif de réception (RXj), une correction de décalage de fréquence d'échantillonnage et une correction de décalage temporel à partir desdites estimations (DHj, DTj) ; et
- la détermination de ladite réponse impulsionnelle (RI^{Pj}) de l'environnement (100) étant obtenue (E60) à partir d'au moins une réponse impulsionnelle obtenue à partir d'au moins une portion (P2₁^{j3n}) du signal sonore reçu corrigé (S3₁^{j}) et d'une portion (P1₁³ⁿ) correspondante du signal sonore émis (S1₁).

2. Procédé selon la revendication 1, **caractérisé en ce qu'**il comporte une étape préliminaire d'obtention d'au moins une caractéristique de l'environnement (100), ce paramètre étant pris en compte pour paramétrer ledit signal sonore émis (S1₁).

3. Procédé selon l'une quelconque des revendications 1 ou 2, **caractérisé en ce qu'**il comporte une étape (E35) de découpe du signal sonore reçu (S2₁^{j}) en lesdites portions (P2₁^{j1}, P2₁^{j2}, P2₁^{j3n}) de signal reçu, ce découpage étant effectué sur la base des portions correspondantes (P1₁¹, P1₁², P1₁³ⁿ) du signal sonore émis (S1₁).

4. Procédé selon l'une quelconque des revendications 1 à 3, **caractérisé en ce que** l'estimation (E40, E50) du décalage de fréquence d'échantillonnage (DHj) entre le dispositif d'émission (TX ; TD) et ledit dispositif de réception (RXj) comporte l'obtention (E40) d'une première estimation (DHj*) de ce décalage par une maximisation, en faisant varier la fréquence d'échantillonnage du signal sonore reçu (S2₁^{j}), de l'amplitude maximale de la réponse impulsionnelle obtenue à partir d'une portion (P1₁¹) du signal sonore émis (S1₁) et d'une portion correspondante (P2₁^{j1}) du signal sonore reçu (S2₁^{j}).

5. Procédé selon la revendication 4, **caractérisé en ce que** l'estimation (E40, E50) du décalage de fréquence d'échantillonnage (DHj) entre le dispositif d'émission (TX ; TD) et ledit dispositif de réception (RXj) comporte un affinage (E50) de ladite première estimation (DHj*) à partir d'une comparaison, pour plusieurs portions (P1₁²) successives du signal sonore émis (S1₁), entre :
- d'une part, la position de l'amplitude maximale de la réponse impulsionnelle obtenue à partir de la portion (P1₁²) du signal sonore émis (S1₁) et d'une portion correspondante (P2₁^{j2∗}) du signal sonore reçu (S2₁^{j}) ré-échantillonné à la fréquence d'échantillonnage correspondant à ladite maximisation, et
- d'autre part, la position de l'amplitude maximale de la réponse impulsionnelle idéale obtenue à partir de la portion (P1₁²) du signal sonore émis (S1₁) et d'un signal sonore reçu théorique identique à la portion (P1₁²) du signal sonore émis (S1₁).

6. Procédé selon l'une quelconque des revendications 1 à 5, **caractérisé en ce que** l'estimation (E45) du décalage temporel (DTj) entre le dispositif d'émission (TX ; TD) et ledit dispositif de réception (RXj) est obtenue à partir d'une comparaison, pour au moins une portion (P1₁¹) du signal sonore émis (S1₁), entre :
- d'une part, la position de l'amplitude maximale de la réponse impulsionnelle obtenue à partir de la portion (P1₁¹) du signal sonore émis (S1₁) et d'une portion correspondante (P2₁^{j1}) du signal sonore reçu (S2₁^{j}), et
- d'autre part, la position de l'amplitude maximale de la réponse impulsionnelle idéale obtenue à partir de la portion (P1₁¹) du signal sonore émis (S1₁) et d'un signal sonore reçu théorique identique à la portion (P1₁²) du signal sonore émis (S1₁).

7. Procédé selon l'une quelconque des revendications 4 ou 5, **caractérisé en ce que** l'estimation (E45) du décalage temporel (DTj) entre le dispositif d'émission (TX ; TD) et ledit dispositif de réception (RXj) est obtenu à partir d'une comparaison, pour au moins une portion (P1₁¹) du signal sonore émis (S1₁), entre :
- d'une part, la position de l'amplitude maximale de la réponse impulsionnelle obtenue à partir de la portion (P1₁¹) du signal sonore émis et d'une portion correspondante (P2₁^{j1∗}) du signal sonore reçu (S2₁^{j}) ré-échantillonné à la fréquence d'échantillonnage correspondant à ladite maximisation, et
- d'autre part, la position de l'amplitude maximale de la réponse impulsionnelle idéale obtenue à partir de la portion (P1₁¹) du signal sonore émis (S1₁) et d'un signal sonore reçu théorique identique à la portion (P1₁²) du signal sonore émis (S1₁).

8. Procédé selon l'une quelconque des revendications 1 à 7, **caractérisé en ce qu'**il comporte une étape (E55) de suppression de séquences invalides du signal sonore reçu corrigé (S3₁^{j∗}), ces séquences invalides correspondant à des pertes de paquets du signal sonore émis (S1₁).

9. Procédé selon la revendication 8, **caractérisé en ce que** le signal sonore émis (S1₁) comporte des balises temporelles (P1₁²) et **en ce qu'**on identifie des séquences invalides du signal sonore reçu corrigé (S3₁^{j∗}) en comparant :
- la durée entre deux balises consécutives pour la réponse impulsionnelle obtenue à partir d'au moins une portion du signal sonore émis (S1₁) comportant ces deux balises et d'une portion correspondante du signal sonore reçu corrigé (S3₁^{j∗}), et
- la durée entre ces deux balises pour le signal sonore émis (S1₁).

10. Procédé selon l'une quelconque des revendications 8 ou 9, **caractérisé en ce que** ladite réponse impulsionnelle (RI^{Pj}) de l'environnement (100) est calculée à partir d'au moins une portion (P2₁^{j3n}) du signal sonore reçu corrigé (S3₁^{j}) dans laquelle les séquences invalides ont été supprimées et d'une portion (P1₁³ⁿ) correspondante du signal sonore émis (S1₁) dans laquelle les séquences correspondant aux séquences invalides ont été supprimées.

11. Procédé selon l'une quelconque des revendications 1 à 10, **caractérisé en ce que** le signal sonore émis (S1₁) comporte au moins une portion (P1₁³ⁿ) comprenant la répétition d'au moins une séquence (P1₁^{3nm}), ladite réponse impulsionnelle de l'environnement (100) étant obtenue (E60) en effectuant :
- le calcul de la réponse impulsionnelle à partir de chacune de ces séquences (P1₁^{3nm}) et de séquences correspondantes (P2₁^{j3nm}) du signal sonore reçu (S2₁^{j}) ;
- la moyenne de ces réponses impulsionnelles au sein de chacune desdites portions (P1₁³ⁿ) ; puis
- la moyenne de ces moyennes pour toutes lesdites portions (P1₁³ⁿ).

12. Procédé selon l'une quelconque des revendications 1 à 11, **caractérisé en ce que** les portions (Pi_{k^{l}}) du signal sonore émis (S1ₖ) comportent au moins une séquence choisie parmi :
- une séquence MLS ("Maximum Length Séquence") ;
- une séquence IRS ("Inverse Repeated Sequence") ;
- une séquence TSP ("Time-Streched Pulses") ;
- une séquence "Logarithmic SineSweep".

13. Système d'obtention d'au moins un paramètre acoustique (CA^{Pj}) d'un environnement (100), ce système comportant :
- un dispositif (TX ; TD) d'émission d'un signal sonore émis (S1₁) ;
- au moins un dispositif (RXj) de réception d'un signal sonore reçu (S2₁^{j}) ;
- un module de détermination de la réponse impulsionnelle (RI^{Pj}) de l'environnement (100) ; et
- un module d'obtention d'un paramètre acoustique (CA^{Pj}) de l'environnement (100) à partir de cette réponse impulsionnelle (RI^{Pj}) ;
- un module d'estimation d'un décalage de fréquence d'échantillonnage (DHj) entre le dispositif d'émission (TX ; TD) et ledit dispositif de réception (RXj) à partir d'au moins une réponse impulsionnelle obtenue à partir d'au moins une portion du signal sonore reçu (P2₁^{j1}, P2₁^{j2∗}) et d'une portion (P1₁¹, P1₁²) correspondante du signal sonore émis ;
- un module d'obtention d'un premier signal sonore (S31j) obtenu en appliquant (E52), au signal sonore reçu (S21j) par ce dispositif de réception (RXj), une correction de décalage de fréquence d'échantillonnage ;
- un module d'estimation d'un décalage temporel (DTj) entre le dispositif d'émission (TX ; TD) et ledit dispositif de réception (RXj) à partir d'au moins une réponse impulsionnelle obtenue à partir d'au moins une portion (P2₁^{j1}) du premier signal sonore reçu corrigé et d'une portion (P1₁¹) correspondante du signal sonore émis ;
ledit système étant **caractérisé en ce qu'**il comporte:
- un module d'obtention d'un signal sonore reçu corrigé (S3₁^{j}) obtenu en appliquant (E52), au premier signal sonore reçu corrigé (S2₁^{j}) par ce dispositif de réception (RXj), une correction de décalage de fréquence d'échantillonnage et une correction de décalage temporel à partir desdites estimations (DHj, DTj) ;
- le module de détermination de la réponse impulsionnelle (RI^{Pj}) de l'environnement (100) étant configuré pour déterminer ladite réponse impulsionnelle (RI^{Pj}) de l'environnement (100) à partir d'au moins une réponse impulsionnelle obtenue à partir d'au moins une portion (P2₁^{j3n}) du signal sonore reçu corrigé (S3₁^{j}) et d'une portion (P1₁³ⁿ) correspondante du signal sonore émis (S1₁).

14. Terminal (10) comprenant un système d'obtention d'au moins un paramètre acoustique (CA^{Pj}) d'un environnement (100) selon la revendication 13, ledit terminal (10) comportant :
- un module de communication (17) apte à envoyer un signal sonore (S1₁) au dispositif d'émission (TX ; TD) dudit système, qui est apte à restituer ce signal sous forme d'un signal sonore émis dans un environnement (100) ;
- un microphone (13) comprenant le dispositif (RXj) de réception d'un signal sonore reçu (S2₁^{j}) ;
- un module de traitement (11, 12, 13) configuré pour mettre en oeuvre :
- le module de détermination de la réponse impulsionnelle (RI^{Pj}) de l'environnement (100) à la position (Pj) dudit terminal (10) ; et
- le module d'obtention d'un paramètre acoustique (CA^{Pj}) de l'environnement (100) à partir de cette réponse impulsionnelle (RI^{Pj}).

15. Terminal (10) selon la revendication 14, **caractérisé en ce que** ledit module de traitement comporte un programme d'ordinateur selon la revendication 16, ledit programme étant enregistré sur un support d'enregistrement selon la revendication 17 constitué par une mémoire non volatile réinscriptible (18) du terminal, les instructions dudit programme étant interprétables par un processeur (11) de ce terminal.

16. Programme d'ordinateur comportant des instructions qui conduisent le système d'obtention d'au moins un paramètre acoustique (CA^{Pj}) d'un environnement (100) selon la revendication 13 à exécuter les étapes du procédé selon l'une quelconque des revendications 1 à 12 lorsque ledit programme est exécuté par un ordinateur.

17. Support d'enregistrement (18) lisible par un ordinateur sur lequel est enregistré un programme d'ordinateur selon la revendication 16.

## Patentansprüche

1. Verfahren zum Erhalten von mindestens einem akustischen Parameter (CA^{Pj}) einer Umgebung (100), wobei das Verfahren umfasst:
- einen Schritt (E20) des Sendens eines Tonsignals, das von einer Sendevorrichtung (TX; TD) gesendet (S1₁) wird;
- einen Schritt (E30) des Empfangens eines empfangenen Tonsignals (S2₁^{j}) durch mindestens eine Empfangsvorrichtung (RXj); und für jede der Empfangsvorrichtungen (RXj):
- einen Schritt (E60) des Bestimmens der Impulsantwort (_{RI}^{Pj}) der Umgebung (100) an der Position (Pj) der Empfangsvorrichtung (RXj);
- einen Schritt (E65) des Erhaltens eines akustischen Parameters (CA^{Pj}) der Umgebung (100) aus dieser Impulsantwort (RI^{Pj});
- eine Schätzung (E40, E50) einer Verschiebung der Abtastfrequenz (DHj) zwischen der Sendevorrichtung (TX; TD) und der Empfangsvorrichtung (RXj) aus mindestens einer Impulsantwort, die aus mindestens einem Teil des empfangenen Tonsignals (P₂₁^{j1}, P2₁^{j2∗}) und einem entsprechenden Teil (P1₁¹, P1₁²) des gesendeten Tonsignals erhalten wird;
- das Erhalten eines ersten Tonsignals (S3₁^{j}), das erhalten wird, indem auf das von dieser Empfangsvorrichtung (RXj) empfangene Tonsignal (S2₁^{j}) eine Korrektur der Verschiebung der Abtastfrequenz angewendet (E52) wird; und
- eine Schätzung (E45) einer Zeitverschiebung (DTj) zwischen der Sendevorrichtung (TX; TD) und der Empfangsvorrichtung (RXj) ausgehend von mindestens einer Impulsantwort, die aus mindestens einem Teil (P2₁^{j1}) des ersten korrigierten empfangenen Tonsignals und einem entsprechenden Teil (P1₁¹) des gesendeten Tonsignals erhalten wird;
wobei das Verfahren **dadurch gekennzeichnet ist, dass** es aufweist:
- das Erhalten eines korrigierten empfangenen Tonsignals (S3₁^{j}), das erhalten wird, indem auf das erste korrigierte empfangene Tonsignal (S2₁^{j}) durch diese Empfangsvorrichtung (RXj) eine Korrektur der Verschiebung der Abtastfrequenz und eine Korrektur der zeitlichen Verschiebung aus den Schätzungen (DHj, DTj) angewendet (E52) wird; und
- wobei die Bestimmung der Impulsantwort (RI^{Pj}) der Umgebung (100) ausgehend von mindestens einer Impulsantwort erhalten (E60) wird, die aus mindestens einem Teil (P2₁^{j3n}) des korrigierten empfangenen Tonsignals (S3₁^{j}) und einem entsprechenden Teil (P1₁³ⁿ) des gesendeten Tonsignals (S1₁) erhalten wird.

2. Verfahren nach Anspruch 1, **dadurch gekennzeichnet, dass** es einen vorausgehenden Schritt zum Erhalten von mindestens einem Merkmal der Umgebung (100) aufweist, wobei dieser Parameter berücksichtigt wird, um das gesendete Tonsignal (S1₁) zu parametrisieren.

3. Verfahren nach einem der Ansprüche 1 oder 2,
**dadurch gekennzeichnet, dass** es einen Schritt (E35) des Zerlegens des empfangenen Tonsignals (S2₁^{j}) in die Teile (P2₁^{j1}, P2₁^{j2}, P2₁^{j3n}) des empfangenen Signals aufweist, wobei diese Zerlegung auf der Grundlage der entsprechenden Teile (P1₁¹, P1₁², P1₁³ⁿ) des gesendeten Tonsignals (S1₁) durchgeführt wird.

4. Verfahren nach einem der Ansprüche 1 bis 3,
**dadurch gekennzeichnet, dass** die Schätzung (E40, E50) der Verschiebung der Abtastfrequenz (DHj) zwischen der Sendevorrichtung (TX; TD) und der Empfangsvorrichtung (RXj) das Erhalten (E40) einer ersten Schätzung (DHj*) dieser Verschiebung durch eine Maximierung aufweist, durch Variieren der Frequenz, mit der das empfangene Tonsignal (S2₁^{j}) abgetastet wird, der maximalen Amplitude der Impulsantwort, die aus einem Teil (P1₁¹) des gesendeten Tonsignals (S1₁) und einem entsprechenden Teil (P2₁^{j1}) des empfangenen Tonsignals (S2₁^{j}) erhalten wird.

5. Verfahren nach Anspruch 4, **dadurch gekennzeichnet, dass** die Schätzung (E40, E50) der Verschiebung der Abtastfrequenz (DHj) zwischen der Sendevorrichtung (TX; TD) und der Empfangsvorrichtung (RXj) eine Verfeinerung (E50) der ersten Schätzung (DHj*) anhand eines Vergleichs für mehrere aufeinanderfolgende Teile (P1₁²) des gesendeten Tonsignals (S1₁) aufweist, zwischen:
- einerseits, der Position der maximalen Amplitude der Impulsantwort, die aus dem Teil (P1₁²) des gesendeten Tonsignals (S1₁) und einem entsprechenden Teil (P2₁^{j2}*) des empfangenen Tonsignals (S2₁^{j}), das mit der der Maximierung entsprechenden Abtastfrequenz neu abgetastet wurde, erhalten wird, und
- andererseits, der Position der maximalen Amplitude der idealen Impulsantwort, die aus dem Teil (P1₁²) des gesendeten Tonsignals (S1₁) und einem theoretischen empfangenen Tonsignal, das mit dem Teil (P1₁²) des gesendeten Tonsignals (S1₁) identisch ist, erhalten wird.

6. Verfahren nach einem der Ansprüche 1 bis 5,
**dadurch gekennzeichnet, dass** die Schätzung (E45) der Zeitverschiebung (DTj) zwischen der Sendevorrichtung (TX; TD) und der Empfangsvorrichtung (RXj) anhand eines Vergleichs für mindestens einen Teil (P1₁¹) des gesendeten Tonsignals (S1₁) erhalten wird, zwischen:
- einerseits der Position der maximalen Amplitude der Impulsantwort, die aus dem Teil (P1₁¹) des gesendeten Tonsignals (S1₁) und einem entsprechenden Teil (P2₁^{j1}) des empfangenen Tonsignals (S2₁^{j}) erhalten wird, und
- andererseits, der Position der maximalen Amplitude der idealen Impulsantwort, die aus dem Teil (P1₁¹) des gesendeten Tonsignals (S1₁) und einem theoretischen empfangenen Tonsignal, das mit dem Teil (P1₁²) des gesendeten Tonsignals (S1₁) identisch ist, erhalten wird.

7. Verfahren nach einem der Ansprüche 4 oder 5,
**dadurch gekennzeichnet, dass** die Schätzung (E45) der Zeitverschiebung (DTj) zwischen der Sendevorrichtung (TX; TD) und der Empfangsvorrichtung (RXj) anhand eines Vergleichs für mindestens einen Teil (P1₁¹) des gesendeten Tonsignals (S1₁) erhalten wird, zwischen:
- einerseits der Position der maximalen Amplitude der Impulsantwort, die aus dem Teil (P1₁¹) des gesendeten Tonsignals und einem entsprechenden Teil (P2₁^{j1}*) des empfangenen Tonsignals (S2₁^{j}), das mit der der Maximierung entsprechenden Abtastfrequenz neu abgetastet wurde, erhalten wird, und
- andererseits, der Position der maximalen Amplitude der idealen Impulsantwort, die aus dem Teil (P1₁¹) des gesendeten Tonsignals (S1₁) und einem theoretischen empfangenen Tonsignal, das mit dem Teil (P1₁²) des gesendeten Tonsignals (S1₁) identisch ist, erhalten wird.

8. Verfahren nach einem der Ansprüche 1 bis 7,
**dadurch gekennzeichnet, dass** es einen Schritt (E55) des Unterdrückens ungültiger Sequenzen des korrigierten (S3₁^{j∗}) empfangenen Tonsignals aufweist, wobei diese ungültigen Sequenzen Paketverlusten des gesendeten Tonsignals (S1₁) entsprechen.

9. Verfahren nach Anspruch 8, **dadurch gekennzeichnet, dass** das gesendete Tonsignal (S1₁) Zeitbaken (P1₁²) aufweist, und dass ungültige Sequenzen des korrigierten empfangenen Tonsignals (S3₁^{j∗}) identifiziert werden, indem verglichen wird:
- die Dauer zwischen zwei aufeinanderfolgenden Baken für die Impulsantwort, die aus mindestens einem Teil des gesendeten Tonsignals (S1₁), das diese beiden Baken aufweist, und einem entsprechenden Teil des korrigierten empfangenen Tonsignals (S3₁^{j∗}) erhalten wird, und
- die Dauer zwischen diesen beiden Baken für das gesendete Tonsignal (S1₁).

10. Verfahren nach einem der Ansprüche 8 oder 9,
**dadurch gekennzeichnet, dass** die Impulsantwort (RI^{Pj}) der Umgebung (100) aus mindestens einem Teil (P2₁^{j3n}) des korrigierten empfangenen Tonsignals (S3₁^{j}) berechnet wird, in dem die ungültigen Sequenzen entfernt wurden, und eines entsprechenden Teils (P1₁³ⁿ) des gesendeten Tonsignals (S1₁), in dem die Sequenzen, die den ungültigen Sequenzen entsprechen, entfernt wurden.

11. Verfahren nach einem der Ansprüche 1 bis 10,
**dadurch gekennzeichnet, dass** das gesendete Tonsignal (S1₁) mindestens einen Teil (P1₁³ⁿ) aufweist, der die Wiederholung mindestens einer Sequenz (P1₁^{3nm}) umfasst, wobei die Impulsantwort der Umgebung (100) erhalten wird (E60) durch Ausführen von:
- dem Berechnen der Impulsantwort aus jeder dieser Sequenzen (P1₁^{3nm}) und entsprechenden Sequenzen (P2₁^{j3nm}) des empfangenen Tonsignals (S2₁^{j});
- dem Mittelwert dieser Impulsantworten innerhalb jedes der Teile (P1₁³ⁿ); anschließend
- dem Mittelwert dieser Mittelwerte für alle der Teile (P1₁³ⁿ).

12. Verfahren nach einem der Ansprüche 1 bis 11,
**dadurch gekennzeichnet, dass** die Teile (Pi_{k^{l}}) des gesendeten Tonsignals (S1ₖ) mindestens eine Sequenz aufweisen, die ausgewählt ist aus:
- einer MLS-Sequenz ("Maximum Length Sequence");
- einer IRS-Sequenz ("Inverse Repeated Sequence");
- einer TSP-Sequenz ("Time-Streched Pulses");
- einer Sequenz "Logarithmic SineSweep".

13. System zum Erhalten mindestens eines akustischen Parameters (CA^{Pj}) einer Umgebung (100), wobei dieses System aufweist:
- eine Vorrichtung (TX; TD) zum Senden eines gesendeten Tonsignals (S1₁);
- mindestens eine Vorrichtung (RXj) zum Empfangen eines empfangenen Tonsignals (S2₁^{j});
- ein Modul zum Bestimmen der Impulsantwort (RI^{Pj}) der Umgebung (100); und
- ein Modul zum Erhalten eines akustischen Parameters (CA^{Pj}) der Umgebung (100) aus dieser Impulsantwort (RI^{Pj});
- ein Modul zum Schätzen einer Verschiebung der Abtastfrequenz (DHj) zwischen der Sendevorrichtung (TX; TD) und der Empfangsvorrichtung (RXj) aus mindestens einer Impulsantwort, die aus mindestens einem Teil des empfangenen Tonsignals (P2₁^{j1}, P2₁^{j2*}) und einem entsprechenden Teil (P1₁¹, P1₁²) des gesendeten Tonsignals erhalten wird;
- ein Modul zum Erhalten eines ersten Tonsignals (S31j), das erhalten wird, indem auf das von dieser Empfangsvorrichtung (RXj) empfangene Tonsignal (S21j) eine Korrektur der Verschiebung der Abtastfrequenz angewendet (E52) wird; und
- ein Modul zum Schätzen einer Zeitverschiebung (DTj) zwischen der Sendevorrichtung (TX; TD) und der Empfangsvorrichtung (RXj) ausgehend von mindestens einer Impulsantwort, die aus mindestens einem Teil (P2₁^{j1}) des ersten korrigierten empfangenen Tonsignals und einem entsprechenden Teil (P1₁¹) des gesendeten Tonsignals erhalten wird;
wobei das System **dadurch gekennzeichnet ist, dass** es aufweist:
- ein Modul zum Erhalten eines korrigierten empfangenen Tonsignals (S3₁^{j}), das erhalten wird, indem auf das erste korrigierte empfangene Tonsignal (S2₁^{j}) durch diese Empfangsvorrichtung (RXj) eine Korrektur der Verschiebung der Abtastfrequenz und eine Korrektur der zeitlichen Verschiebung aus den Schätzungen (DHj, DTj) angewendet (E52) wird;
- wobei das Modul zur Bestimmung der Impulsantwort (RI^{Pj}) der Umgebung (100) konfiguriert ist, um die Impulsantwort (RI^{Pj}) der Umgebung (100) aus mindestens einer Impulsantwort zu bestimmen, die aus mindestens einem Teil (P2₁^{j3n}) des korrigierten empfangenen Tonsignals (S3₁^{j}) und einem entsprechenden Teil (P1₁³ⁿ) des gesendeten Tonsignals (S1₁) erhalten wird.

14. Endgerät (10), umfassend ein System zum Erhalten mindestens eines akustischen Parameters (CA^{Pj}) einer Umgebung (100) nach Anspruch 13, wobei das Endgerät (10) aufweist:
- ein Kommunikationsmodul (17), das geeignet ist, ein Tonsignal (S1₁) an die Sendevorrichtung (TX; TD) des Systems zu senden, die geeignet ist, dieses Signal in Form eines gesendeten Tonsignals in einer Umgebung (100) wiederzugeben;
- ein Mikrofon (13), umfassend die Vorrichtung (RXj) zum Empfangen eines empfangenen Tonsignals (S2₁^{j});
- ein Verarbeitungsmodul (11, 12, 13), das konfiguriert ist, umzusetzen:
- das Modul zum Bestimmen der Impulsantwort (RI^{Pj}) der Umgebung (100) auf die Position (Pj) des Endgeräts (10); und
- das Modul zum Erhalten eines akustischen Parameters (CA^{Pj}) der Umgebung (100) aus dieser Impulsantwort (RI^{Pj});

15. Endgerät (10) nach Anspruch 14, **dadurch gekennzeichnet, dass** das Verarbeitungsmodul ein Computerprogramm nach Anspruch 16 aufweist, wobei das Programm auf einem Aufzeichnungsträger nach Anspruch 17 aufgezeichnet ist, der von einem wiederbeschreibbaren nichtflüchtigen Speicher (18) des Endgeräts gebildet wird, wobei die Anweisungen des Programms von einem Prozessor (11) dieses Endgeräts interpretierbar sind.

16. Computerprogramm mit Anweisungen, die das System zum Erhalten mindestens eines akustischen Parameters (CA^{Pj}) einer Umgebung (100) nach Anspruch 13 dazu veranlassen, die Schritte des Verfahrens nach einem der Ansprüche 1 bis 12 auszuführen, wenn das Programm von einem Computer ausgeführt wird.

17. Computerlesbarer Aufzeichnungsträger (18), auf dem ein Computerprogramm nach Anspruch 16 aufgezeichnet ist.

## Claims

1. A method for obtaining at least one acoustic parameter (CA^{Pj}) of an environment (100), this method comprising:
- a step (E20) of emitting a sound signal emitted (S1₁) by an emission device (TX; TD);
- a step (E30) of receiving a sound signal received (S2₁^{j}) by at least one reception device (RXj); and for each of said reception devices (RXj):
- a step (E60) of determining the impulse response (RI^{Pj}) of the environment (100) at the position (Pj) of said reception device (RXj); and
- a step (E65) of obtaining an acoustic parameter (CA^{Pj}) of the environment (100) on the basis of this impulse response (RI^{Pj});
- an estimation (E40, E50) of a sampling frequency shift (DHj) between the emission device (TX; TD) and said reception device (RXj) on the basis of at least one impulse response obtained on the basis of at least one portion of the sound signal received (P2₁^{j1}, P2₁^{j2*}) and of a corresponding portion (P1₁¹, P1₁²) of the sound signal emitted;
- an obtention of a corrected sound signal received (S3₁^{j}) by applying (E52), to the sound signal received (S2₁^{j}) by this reception device (RXj), a sampling frequency shift correction; and
- an estimation (E45) of a temporal shift (DTj) between the emission device (TX; TD) and said reception device (RXj) on the basis of at least one impulse response obtained on the basis of at least one first portion (P2₁^{j1}) of the corrected sound signal received and of a corresponding portion (P1₁¹) of the sound signal emitted;
said method being **characterized in that** it comprises:
- the obtaining of a corrected sound signal received (S3₁^{j}) obtained by applying (E52), to the first corrected sound signal received (S2₁^{j}) by this reception device (RXj), a sampling frequency shift correction and a temporal shift correction on the basis of said estimations (DHj, DTj); and
- the determination of said impulse response (RI^{Pj}) of the environment (100) being obtained (E60) on the basis of at least one impulse response obtained on the basis of at least one portion (P2₁^{j3n}) of the corrected sound signal received (S3₁^{j}) and of a corresponding portion (P1₁³ⁿ) of the sound signal emitted (S1₁) .

2. The method as claimed in claim 1, **characterized in that** it comprises a preliminary step of obtaining at least one characteristic of the environment (100), this parameter being taken into account to parametrize said sound signal emitted (S1₁).

3. The method as claimed in either of claims 1 or 2, **characterized in that** it comprises a step (E35) of cutting the sound signal received (S2₁^{j}) into said portions (P2₁^{j1}, P2₁^{j2}, P2₁^{j3n}) of signal received, this cutting being performed on the basis of the corresponding portions (P1₁¹, P1₁², P1₁³ⁿ) of the sound signal emitted (S1₁) .

4. The method as claimed in any one of claims 1 to 3, **characterized in that** the estimation (E40, E50) of the sampling frequency shift (DHj) between the emission device (TX; TD) and said reception device (RXj) comprises the obtaining (E40) of a first estimation (DHj*) of this shift by a maximization, by varying the sampling frequency of the sound signal received (S2₁^{j}), of the maximum amplitude of the impulse response obtained on the basis of a portion (P1₁¹) of the sound signal emitted (S1₁) and of a corresponding portion (P2₁^{j1}) of the sound signal received (S2₁^{j}).

5. The method as claimed in claim 4, **characterized in that** the estimation (E40, E50) of the sampling frequency shift (DHj) between the emission device (TX; TD) and said reception device (RXj) comprises a refinement (E50) of said first estimation (DHj*) on the basis of a comparison, for several successive portions (P1₁²) of the sound signal emitted (S1₁), between:
- on the one hand, the position of the maximum amplitude of the impulse response obtained on the basis of the portion (P1₁²) of the sound signal emitted (S1₁) and of a corresponding portion (P2₁^{j2*}) of the sound signal received (S2₁^{j}) re-sampled at the sampling frequency corresponding to said maximization, and
- on the other hand, the position of the maximum amplitude of the ideal impulse response obtained on the basis of the portion (P1₁²) of the sound signal emitted (S1₁) and of a theoretical sound signal received identical to the portion (P1₁²) of the sound signal emitted (S1₁).

6. The method as claimed in any one of claims 1 to 5, **characterized in that** the estimation (E45) of the temporal shift (DTj) between the emission device (TX; TD) and said reception device (RXj) is obtained on the basis of a comparison, for at least one portion (P1₁¹) of the sound signal emitted (S1₁), between:
- on the one hand, the position of the maximum amplitude of the impulse response obtained on the basis of the portion (P1₁¹) of the sound signal emitted (S1₁) and of a corresponding portion (P2₁^{j1}) of the sound signal received (S2₁^{j}), and
- on the other hand, the position of the maximum amplitude of the ideal impulse response obtained on the basis of the portion (P1₁¹) of the sound signal emitted (S1₁) and of a theoretical sound signal received identical to the portion (P1₁²) of the sound signal emitted (S1₁).

7. The method as claimed in either one of claims 4 or 5, **characterized in that** the estimation (E45) of the temporal shift (DTj) between the emission device (TX; TD) and said reception device (RXj) is obtained on the basis of a comparison, for at least one portion (P1₁¹) of the sound signal emitted (S1₁), between:
- on the one hand, the position of the maximum amplitude of the impulse response obtained on the basis of the portion (P1₁¹) of the sound signal emitted and of a corresponding portion (P2₁^{j1}*) of the sound signal received (S2₁^{j}) re-sampled at the sampling frequency corresponding to said maximization, and
- on the other hand, the position of the maximum amplitude of the ideal impulse response obtained on the basis of the portion (P1₁¹) of the sound signal emitted (S1₁) and of a theoretical sound signal received identical to the portion (P1₁²) of the sound signal emitted (S1₁).

8. The method as claimed in any one of claims 1 to 7, **characterized in that** it comprises a step (E55) of deleting invalid sequences of the corrected sound signal received (S3₁^{j*}), these invalid sequences corresponding to losses of packets of the sound signal emitted (S1₁).

9. The method as claimed in claim 8, **characterized in that** the sound signal emitted (S1₁) comprises temporal tags (P1₁²) and **in that** invalid sequences of the corrected sound signal received (S3₁^{j*}) are identified by comparing:
- the duration between two consecutive tags for the impulse response obtained on the basis of at least one portion of the sound signal emitted (S1₁) comprising these two tags and of a corresponding portion of the corrected sound signal received (S3₁^{j*}), and
- the duration between these two tags for the sound signal emitted (S1₁) .

10. The method as claimed in either one of claims 8 or 9, **characterized in that** said impulse response (RI^{Pj}) of the environment (100) is calculated on the basis of at least one portion (P2₁^{j3n}) of the corrected sound signal received (S3₁^{j}) in which the invalid sequences have been deleted and of a corresponding portion (P1₁³ⁿ) of the sound signal emitted (S1₁) in which the sequences corresponding to the invalid sequences have been deleted.

11. The method as claimed in any one of claims 1 to 10, **characterized in that** the sound signal emitted (S1₁) comprises at least one portion (P1₁³ⁿ) comprising the repetition of at least one sequence (P1₁^{3nm}), said impulse response of the environment (100) being obtained (E60) by performing:
- the calculation of the impulse response on the basis of each of these sequences (P1₁^{3nm}) and of corresponding sequences (P2₁^{j3nm}) of the sound signal received (S2₁^{j});
- the average of these impulse responses within each of said portions (P1₁³ⁿ) ; and then
- the average of these averages for all said portions (P1₁³ⁿ) .

12. The method as claimed in any one of claims 1 to 11, **characterized in that** the portions (Piₖ^{l}) of the sound signal emitted (S1ₖ) comprise at least one sequence chosen from among:
- an MLS sequence ("Maximum Length Sequence");
- an IRS sequence ("Inverse Repeated Sequence");
- a TSP sequence ("Time-Streched Pulses");
- a "Logarithmic SineSweep" sequence.

13. A system for obtaining at least one acoustic parameter (CA^{Pj}) of an environment (100), this system comprising:
- an emission device (TX; TD) for emitting a sound signal emitted (S1₁) ;
- at least one reception device (RXj) for receiving a sound signal received (S2₁^{j});
- a module for determining the impulse response (RI^{Pj}) of the environment (100); and
- a module for obtaining an acoustic parameter (CA^{Pj}) of the environment (100) on the basis of this impulse response (RI^{Pj});
- a module for estimating a sampling frequency shift (DHj) between the emission device (TX; TD) and said reception device (RXj) on the basis of at least one impulse response obtained on the basis of at least one portion of the sound signal received (P2₁^{j1}, P2₁^{j2}*) and of a corresponding portion (P1₁¹, P1₁²) of the sound signal emitted;
- a module for obtaining a first sound signal received (S3₁^{j}) by applying (E52), to the sound signal (S2₁^{j}) received by this reception device (RXj), a sampling frequency shift correction;
- a module for estimating a temporal shift (DTj) between the emission device (TX; TD) and said reception device (RXj) on the basis of at least one impulse response obtained on the basis of at least one portion (P2₁^{j1}) of the first sound signal received corrected and of a corresponding portion (P1₁¹) of the sound signal emitted;
said system being **characterized in that** it comprises:
- a module for obtaining a corrected sound signal received (S3₁^{j}) obtained by applying (E52), to the sound signal received (S2₁^{j}) by this reception device (RXj), a sampling frequency shift correction and a temporal shift correction on the basis of said estimations (DHj, DTj);
- the module for determining the impulse response (RI^{Pj}) of the environment (100) being configured to determine said impulse response (RI^{Pj}) of the environment (100) on the basis of at least one impulse response obtained on the basis of at least one portion (P2₁^{j3n}) of the corrected sound signal received (S3₁^{j}) and of a corresponding portion (P1₁³ⁿ) of the sound signal emitted (S1₁) .

14. A terminal (10) comprising a system for obtaining at least one acoustic parameter (CA^{Pj}) of an environment (100) according to claim 13, said terminal (10) comprising:
- a communication module (17) able to dispatch a sound signal (S1₁) to the emission device (TX; TD) of said system, that is able to play back this signal in the form of a sound signal emitted in an environment (100);
- a microphone (13) comprising the reception device (RXj) able to receive a sound signal received (S2₁^{j});
- a processing module (11, 12, 13) configured to implement:
- the module of determination of the impulse response (RI^{PJ}) of the environment (100) at the position (Pj) of said terminal (10); and
- the module of obtention of an acoustic parameter (CA^{Pj}) of the environment (100) on the basis of this impulse response (RI^{Pj}).

15. The terminal (10) as claimed in claim 14, **characterized in that** said processing module comprises a computer program as claimed in claim 16, said program being recorded on a recording medium as claimed in claim 17 consisting of a rewritable nonvolatile memory (18) of the terminal, the instructions of said program being interpretable by a processor (11) of this terminal.

16. A computer program comprising instructions that lead the system for obtaining at least one acoustic parameter (CA^{Pj}) of an environment (100) according to claim 13 to execute the steps of the method for obtaining at least one acoustic parameter as claimed in any one of claims 1 to 12 when said program is executed by a computer.

17. A recording medium (18) readable by a computer on which a computer program as claimed in claim 16 is recorded.
